# FASCICULE DE BREVET EUROPEEN

(11) **EP 2 336 099 B1**
(45) Date de publication et mention de la délivrance du brevet: **13.02.2019**
(21) Numéro de dépôt: 10194751.3
(22) Date de dépôt: 13.12.2010
(51) Int. Cl.: C04B 35/83, D01H 1/42, D04H 1/558, F16D 65/12, F16D 69/02

(54) **PROCÉDÉ DE FABRICATION D'UNE PIÈCE DE FRICTION À BASE DE MATÉRIAU COMPOSITE C/C.**
VERFAHREN ZUR HERSTELLUNG EINES KARBON-/KARBON-VERBUNDWERKSTOFF-ABRIEBTEILS
METHOD FOR PRODUCING A FRICTION PART FROM A CARBON/CARBON COMPOSITE MATERIAL

(30) Priorité: 16.12.2009 FR 0959036
(43) Date de publication de la demande: 22.06.2011
(73) Titulaire: Safran Landing Systems, 78140 Vélizy-Villacoublay (FR)
(72) Inventeur: Jouin, Jean-Marie, 78000 Versailles (FR); Lherm, Eric, 01800 Rignieux Le Franc (FR); Turgis, Philippe, 78150 Le Chesnay (FR)
(74) Mandataire: Delumeau, François Guy

(56) Documents cités:
- EP-A1- 2 067 757
- EP-A1- 2 088 347
- EP-A1- 2 093 453
- EP-A1- 2 103 832
- WO-A1-00/50676
- FR-A1- 2 784 695
- US-A- 5 392 500
- US-A- 5 952 075
- US-A- 5 962 135

## Description

### Arrière-plan de l'invention

L'invention concerne la fabrication de pièces de friction en matériau composite carbone/carbone C/C, en particulier mais non exclusivement des disques de freins d'avions.

Par pièces de friction à base de matériau composite C/C, on entend ici des pièces de friction en matériau composite C/C ou essentiellement en matériau composite C/C, c'est-à-dire, dans ce dernier cas, pouvant comprendre des éléments additionnels en faible pourcentage en poids, par exemple des particules de céramique destinées notamment à améliorer la résistance à l'usure.

Des disques de freins d'avions à base de matériau composite C/C sont largement utilisés. Un procédé bien connu pour la fabrication de tels disques comprend les étapes suivantes :
- réalisation d'une préforme annulaire en fibres de précurseur de carbone, typiquement en fibres de polyacrylonitrile (PAN) préoxydé,
- traitement thermique de carbonisation pour transformer le précurseur de carbone et obtenir une préforme annulaire en fibres de carbone destinée à former le renfort fibreux du matériau composite, et
- densification de la préforme en fibres de carbone par une matrice de carbone.

Une préforme annulaire en fibres de précurseur de carbone peut être réalisée de différentes façons :
- formation d'une structure fibreuse épaisse par superposition de strates de texture fibreuse bidimensionnelle et liaison entre elles des strates superposées et découpe de préformes annulaires dans la structure fibreuse, la texture fibreuse bidimensionnelle étant par exemple une nappe fibreuse multidirectionnelle (nD) obtenue par superposition de nappes fibreuses unidirectionnelles (UD) et liaison des nappes UD entre elles, par exemple par aiguilletage léger,
- découpe de strates annulaires ou en forme de disques pleins dans une texture fibreuse bidimensionnelle, par exemple une nappe nD, puis superposition des strates fibreuses annulaires et liaison entre elles des strates superposées, pour obtenir directement une préforme fibreuse annulaire ou une préforme fibreuse en forme de disque dont la partie centrale est ensuite découpée pour obtenir une préforme annulaire,
- enroulement d'un tissu ou d'une tresse hélicoïdaux en spires à plat pour former des strates fibreuses annulaires superposées et liaison des strates entre elles.

Dans ces différents processus, la liaison entre elles des strates superposées est habituellement réalisée par aiguilletage. A cet effet, typiquement, les strates sont superposées sur un support horizontal et l'aiguilletage est réalisé au fur et à mesure de la superposition des strates, une passe d'aiguilletage étant réalisée à chaque fois qu'une nouvelle strate est ajoutée. L'aiguilletage est réalisé au moyen d'aiguilles à barbes qui pénètrent verticalement (direction Z) dans la structure fibreuse ou préforme fibreuse en cours de formation, la liaison entre strates étant obtenue par des fibres déplacées en direction Z par les aiguilles. Un pas de descente est imposé au support horizontal à chaque fois qu'une nouvelle strate est amenée après une passe d'aiguilletage afin de contrôler la densité de fibres en Z dans l'épaisseur de la structure fibreuse ou de la préforme fibreuse.

Concernant la réalisation de préformes annulaires en fibres de précurseur de carbone, on pourra par exemple se référer aux documents suivants : US 4 790 052, US 5 792 715 et US 6 009 605.

On notera que la réalisation d'une préforme annulaire en fibres de carbone directement par superposition de strates en fibres de carbone et liaison des strates entre elles par aiguilletage a aussi été proposée.

Avant densification par une matrice PyC, il est connu de réaliser sur les préformes en fibres de carbone un traitement thermique à haute température, typiquement à au moins 1600°C, notamment pour éliminer des impuretés contenues dans les fibres, en particulier du sodium résiduel provenant du processus d'élaboration des fibres de précurseur de carbone. On pourra par exemple se référer aux documents suivants : US 7 351 390, US 7 052 643 et US 7 410 630.

La densification par une matrice de carbone peut être réalisée par voie liquide, c'est-à-dire par imprégnation de la préforme par un précurseur de carbone à l'état liquide, par exemple une résine ou un brai, et par transformation du précurseur en carbone par traitement thermique de carbonisation.

La densification par une matrice de carbone peut aussi être réalisée par un processus d'infiltration chimique en phase gazeuse, ou CVI ("Chemical Vapor Infiltration") comprenant, de façon bien connue, la disposition des préformes en fibres de carbone dans une enceinte et l'admission dans l'enceinte d'une phase gazeuse contenant un ou plusieurs précurseurs gazeux de carbone, les conditions notamment de température et de pression dans l'enceinte étant contrôlées pour permettre à la phase gazeuse de diffuser au sein des préformes et d'y former un dépôt PyC par décomposition du ou des précurseurs. La phase gazeuse comprend typiquement du méthane et/ou du propane en tant que précurseur(s) de carbone, étant noté que d'autres précurseurs gazeux hydrocarbonés peuvent être utilisés. Une pluralité de préformes annulaires disposées en piles peuvent être simultanément densifiées dans une même enceinte comme décrit notamment dans le document US 5 904 957.

La densification par une matrice PyC peut aussi être réalisée par un processus dit de "caléfaction" comprenant, également de façon connue, l'immersion d'une préforme annulaire en fibres de carbone dans un bain de précurseur liquide de carbone, et le chauffage de la préforme par exemple par couplage avec un inducteur. Au contact de la préforme chauffée, le liquide est vaporisé. La vapeur diffuse et génère par décomposition un dépôt PyC au sein de la préforme. On pourra notamment se référer au document US 5 733 611.

Il est connu également de réaliser une densification par une matrice carbone en combinant le processus CVI et le processus par voie liquide. Ainsi, les documents EP 2 088 347 et EP 2 093 453 divulguent une phase de densification par CVI suivie d'une phase de densification par imprégnation par brai et carbonisation. La carbonisation du brai est réalisée à une température comprise entre 1200°C et 1800°C, par exemple 1600°C et peut être suivie d'un traitement thermique de graphitation du carbone issu du précurseur brai à une température comprise entre 1600°C et 2400°C. On connait, par ailleurs, US 5 962 135 qui divulgue la réalisation d'un matériau composite carbone/carbone dans lequel un traitement thermique de graphitation de la matrice est réalisé.

La présente invention est définie à la revendication 1 et concerne la fabrication de pièces de friction à base de matériau composite C/C dans lequel le carbone de la matrice est du PyC issu de précurseur à l'état gazeux au moins dans une phase externe majoritaire de la matrice carbone. Par "PyC issu de précurseur à l'état gazeux" on entend ici aussi bien du PyC obtenu par un processus de CVI classique que du PyC obtenu par le processus de "caléfaction" mentionné plus haut.

Après densification par une matrice PyC, il est connu de procéder éventuellement à un traitement thermique final à haute température, typiquement au-delà de 2000°C, afin de réaliser une graphitation de la matrice PyC lorsque celle-ci est en PyC de type laminaire rugueux ou PyC-RL ("Rough Laminar"). En effet, parmi les différents types de PyC susceptibles d'être obtenus selon les conditions dans lesquelles le processus CVI est réalisé (notamment PyC isotrope, PyC laminaire lisse, PyC-RL), le PyC-RL est celui qui se prête à la graphitation. Un processus d'élaboration d'une matrice PyC-RL est décrit dans le document US 6 001 419.

Des disques de freins d'avions en matériau composite C/C avec matrice PyC-RL graphitée par traitement thermique final à haute température (matériau dénommé A) présentent une bonne résistance à l'oxydation et de bonnes performances en freinage, notamment une bonne stabilité du coefficient de frottement lors de freinages à haute énergie tels que des freinages d'arrêt d'urgence à vitesse élevée avant décollage ou freinages RTO ("Rejected Take Off"). Toutefois, l'usure de ces disques est relativement élevée.

Des disques de frein en matériau composite C/C sans traitement thermique final à haute température mais avec un traitement thermique à haute température réalisé sur la préforme en fibres de carbone avant densification (matériau dénommé B) présentent une faible usure à basse énergie, notamment lors de freinages pendant le roulage à froid, qui est une composante importante de l'usure globale constatée habituellement lors d'un cycle d'exploitation normal comprenant roulage à froid avec freinages d'un point de stationnement jusqu'au décollage, vol, freinage à l'atterrissage et roulage à chaud avec freinages de la piste d'atterrissage jusqu'à un point de stationnement. Toutefois, par rapport aux disques en matériau A, une moindre résistance à l'oxydation et une moindre stabilité du coefficient de frottement lors de freinages à haute énergie ont été constatées.

### Objet et résumé de l'invention

L'invention a pour but de proposer un procédé de fabrication de disques de freins à base de matériau composite C/C et plus généralement de pièces de friction à base de matériau composite C/C présentant un meilleur compromis entre résistance à l'usure par frottement, résistance à l'oxydation et stabilité des performances de freinage, le carbone de la matrice étant du carbone pyrolytique issu de précurseur à l'état gazeux au moins dans une phase externe majoritaire de la matrice.

Ce but est atteint par un procédé selon la revendication 1. Le traitement thermique final est, de préférence, réalisé à une température comprise entre 1 550°C et 1 700°C.

Comme cela sera montré par la suite, la réalisation d'un traitement thermique final dans une telle plage de température particulière, permet, de façon tout à fait inattendue, en comparaison avec le procédé de l'art antérieur ne comprenant pas de traitement final à haute température, de conserver une faible usure, voire même de la réduire encore, tout en améliorant de façon importante les performances en freinage, y compris lors de freinages à haute énergie, et la résistance à l'oxydation, alors que le traitement thermique final est réalisé à une température bien inférieure au seuil de graphitation d'une matrice PyC.

Selon un mode de réalisation, dans toute la matrice, le carbone de la matrice est formé par du carbone pyrolytique issu de précurseur à l'état gazeux.

Selon un autre mode de réalisation, dans une phase interne minoritaire de la matrice, le carbone de la matrice est obtenu par imprégnation de la préforme par un précurseur de carbone à l'état liquide et carbonisation du précurseur, le carbone de la phase interne minoritaire représentant de préférence au plus 20 % du volume total du carbone de la matrice.

Avant densification, un traitement thermique est réalisé sur la préforme en fibres de carbone à une température supérieure à 1600°C.

On forme une matrice en carbone pyrolytique de type laminaire rugueux.

Selon un mode de réalisation, la préforme fibreuse est réalisée par superposition de strates fibreuses bidimensionnelles en fibres de précurseur de carbone, liaison des strates entre elles par aiguilletage au fur et à mesure de la superposition des strates et carbonisation pour transformer les fibres en précurseur de carbone en fibres de carbone.

Selon un autre mode de réalisation, la préforme est réalisée par superposition de strates fibreuses bidimensionnelles en fibres de carbone et liaison des strates entre elles par aiguilletage au fur et à mesure de la superposition des strates.
Dans l'un et l'autre cas, l'aiguilletage de chaque nouvelle strate superposée est réalisé avec une densité d'aiguilletage au plus égale à 90 coups/cm².

### Brève description des dessins

L'invention sera mieux comprise à la lecture de la description faite ci-après, à titre indicatif mais non limitatif, en référence aux dessins annexés sur lesquels :
- la figure 1 montre des étapes successives d'un procédé de fabrication d'un disque de frein en matériau composite C/C selon un mode de réalisation d'un procédé conforme à l'invention ; et
- la figure 2 montre des courbes illustrant les relations entre usure et température de traitement thermique final de disques de freins d'avions en matériau composite C/C, pour différentes températures de traitement thermique des préformes en fibres de carbone avant densification.

### Description détaillée de modes de réalisation

Des modes particuliers de réalisation de l'invention seront décrits ci-après dans le cadre de l'application à des disques de frein d'avions. Plus généralement, l'invention est toutefois applicable à des pièces de friction de différentes formes, à savoir notamment disques, plaquettes et patins.

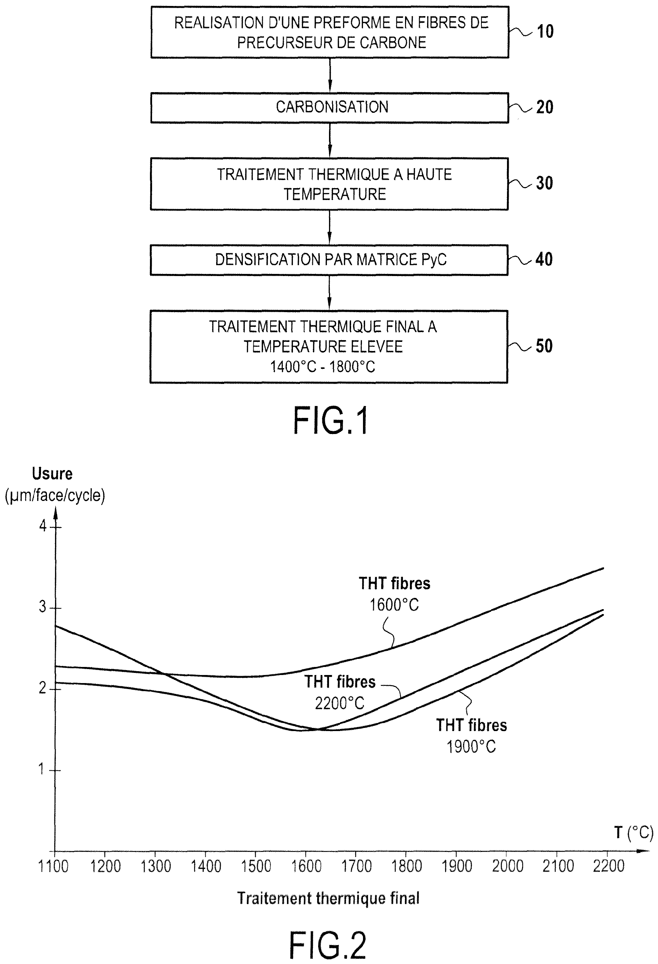

Une première étape 10 du procédé de la figure 1 consiste à réaliser une préforme fibreuse en fibres de précurseur de carbone. On peut à cet effet utiliser un des processus mentionnés plus haut, à savoir :
- formation d'une structure fibreuse épaisse par superposition de strates de texture fibreuse bidimensionnelle et liaison des strates entre elles par aiguilletage, la texture fibreuse étant par exemple une nappe nD, et découpe de préformes annulaires dans la structure fibreuse, ou
- découpe de strates annulaires ou en forme de disques dans une texture bidimensionnelle et formation de préformes par superposition des strates et liaison des strates entre elles par aiguilletage, ou
- enroulement en spires à plat d'un tissu hélicoïdal ou d'une tresse hélicoïdale pour former des strates annulaires superposées et liaison des strates entre elles par aiguilletage.

L'aiguilletage est réalisé en passes successives au moyen d'aiguilles à barbes, l'aiguilletage étant effectué sur toute la surface de chaque nouvelle strate amenée. On pourra utiliser le processus d'aiguilletage décrit dans le document WO 96/12842. De préférence, lors de l'aiguilletage de chaque strate, la densité d'aiguilletage (nombre de coups d'aiguilles par unité de surface) est relativement faible, tout en assurant une liaison inter-strates suffisante pour conférer la résistance au délaminage requise pour le disque de frein à réaliser, c'est-à-dire la résistance à la décohésion par rupture de la liaison entre strates. Une densité d'aiguilletage au moins égale à 30 coups/cm² et au plus égale à 90 coups/cm² est préférée.

A l'étape suivante 20, la préforme en fibres de précurseur de carbone est transformée en préforme en fibres de carbone par un traitement thermique de carbonisation, à une température comprise entre 750°C et 1100°C, par exemple d'environ 900°C.

Après carbonisation, un traitement thermique à haute température est réalisé sur la préforme en fibres de carbone (étape 30). Le traitement thermique est effectué sous atmosphère neutre, par exemple dans une enceinte balayée par un flux d'azote, à une température supérieure à 1600°C, par exemple comprise entre 1600°C et 2500°C. Un objet est d'éliminer des impuretés résiduelles contenues dans les fibres, notamment du sodium.

La carbonisation (étape 20) et le traitement thermique à haute température (étape 30) peuvent être enchaînés dans une même enceinte comme décrit dans le document EP 1 521 731.

Ensuite, à l'étape 40, la préforme en fibres de carbone traitée thermiquement est densifiée par une matrice en PyC issu de précurseur à l'état gazeux. On forme une matrice en carbone pyrolytique de type laminaire rugueux. Dans le cas d'un processus de CVI classique, on utilise par exemple une phase gazeuse formée d'un mélange de méthane et de propane et la densification est réalisée à une température comprise environ entre 850°C et 1050°C et sous une pression réduite comprise environ entre 0,5 kPa et 3,3 kPa, les paramètres du processus classique de CVI (température, pression, débit de phase gazeuse, taux de propane dans le mélange méthane/propane, temps de séjour de la phase gazeuse dans l'enceinte de densification) étant choisis et éventuellement variés au cours du processus pour obtenir une matrice de type PyC-RL. On pourra se référer au document US 6 001 419 déjà mentionné. Le traitement thermique à haute température de la préforme en fibres de carbone (étape 30) et la densification par processus de CVI classique peuvent être enchaînés dans une même enceinte comme décrit dans le document US 7 052 643. Dans le cas d'un processus dit de "caléfaction", on utilise par exemple du cyclohexane en tant que précurseur liquide de carbone et la préforme est chauffée à une température comprise environ entre 850°C et 1000°C (voir notamment le document WO 99/40042).

A la fin de ladite densification, un traitement thermique final à température élevée est réalisé (étape 50). Ce traitement thermique est effectué à une température comprise entre 1400°C et 1800°C, de préférence entre 1550°C et 1700°C. On obtient alors un disque de frein en matériau composite C/C dans lequel le carbone de la matrice est du PyC issu de précurseur à l'état gazeux. Le disque est prêt à être utilisé après usinage aux dimensions souhaitées et application d'une protection anti-oxydation sur les surfaces non frottantes.

Alors que le traitement thermique final effectué dans cette plage particulière de température (entre 1400°C et 1800°C) n'induit pas de graphitation de la matrice PyC-RL, il a été constaté de façon tout à fait inattendue qu'il contribue à une augmentation de la diffusivité thermique dans l'épaisseur du disque en matériau C/C obtenu, à une meilleure résistance à l'oxydation et à de meilleures performances en freinage, notamment lors de freinages à haute énergie, tout en présentant une faible usure en frottement. Il a été constaté en outre que ce traitement thermique final induit une diminution de la rigidité transversale (dans le plan du disque) et de la rigidité axiale (dans l'épaisseur du disque). De la sorte, on obtient lors du freinage une meilleure adaptation géométrique de la face frottante du disque (disque à une seule face frottante) ou de chaque face frottante du disque (disque à deux faces frottantes opposées), c'est-à-dire une plus grande surface de contact avec une surface frottante opposée. On évite ainsi le risque de limiter le frottement à des zones réduites de la ou chaque face frottante avec apparition de points très chauds favorisant l'usure par oxydation et limitant la performance de frottement.

Selon une variante du procédé décrit en référence à la figure 1, les étapes 10 et 20 pourront être combinées en réalisant une préforme fibreuse en fibres de carbone directement à partir de la superposition de strates fibreuses en fibres de carbone et liaison des strates fibreuses entre elles. La liaison peut être réalisée par aiguilletage avec une densité d'aiguilletage de préférence au plus égale à 90 coups/cm².

Selon une autre variante, la densification par du PyC issu de précurseur à l'état gazeux peut être précédée par une première étape de densification par une phase interne de matrice carbone obtenue par imprégnation de la préforme fibreuse par un précurseur de carbone, à l'état liquide, par exemple une résine ou un brai, et transformation du précurseur en carbone par carbonisation. Une telle phase interne de matrice peut notamment assurer une consolidation de la préforme, c'est-à-dire une liaison suffisante des fibres entre elles pour rigidifier la préforme. Une telle phase interne représente une fraction minoritaire du carbone de la matrice, c'est-à-dire de préférence au plus 20 % du volume total du carbone de la matrice, la phase externe de la matrice en PyC issu de précurseur à l'état gazeux étant majoritaire.

Egalement en variante, des charges solides en un matériau autres que le carbone peuvent être introduites dans le matériau composite lors de son élaboration, notamment des particules de céramique visant à améliorer la résistance à l'usure. La quantité de telles charges est relativement faible, par exemple moins de 5% en poids dans le matériau composite. Un processus d'introduction de particules céramiques est décrit dans le document WO 2006/067184.

### Exemple 1

On a réalisé des disques de frein en matériau composite C/C par un procédé du type de celui décrit en référence à la figure 1 dans les conditions particulières suivantes :
- réalisation de préformes annulaires en fibres de PAN préoxydé par découpe dans une structure fibreuse formée par superposition de strates constituées par des nappes tridimensionnelles (3D) en fibres de PAN préoxydé et liaison des strates entre elles par aiguilletage. Les nappes 3D étaient formées par superposition de 3 nappes UD formant entre elles des angles de 60° et liaison des nappes UD par aiguilletage léger. L'aiguilletage des strates entre elles a été réalisé de manière à obtenir une densité de fibres en Z sensiblement constante dans l'épaisseur des préformes en utilisant un processus tel que décrit dans le document US 5 792 715. Le taux de fibres en Z était d'environ 3% (soit 3% du volume apparent de la préforme occupé par les fibres en Z) ;
- carbonisation des préformes en fibres de PAN préoxydé à une température d'environ 900°C pour obtenir des fibres de carbone ;
- traitement thermique à haute température (THT) des préformes en fibres de carbone sous gaz neutre (azote), une première famille de préformes étant traitée à 1600°C, une deuxième famille à 1900°C et une troisième famille à 2200°C ;
- densification par processus CVI classique avec une phase gazeuse formée d'un mélange de méthane et de propane, les paramètres de la densification étant choisis pour obtenir une matrice PyC-RL ; et
- traitement thermique final des disques en matériau composite C/C obtenus après densification en choisissant différentes températures.

Les disques après traitement thermique final ont été soumis à des mêmes tests d'usure par des essais de freinage reproduisant un cycle d'exploitation comprenant :
- roulage à froid avec plusieurs freinages entre point de stationnement et décollage,
- vol,
- freinage à l'atterrissage,
- roulage à chaud avec plusieurs freinages entre piste d'atterrissage et point de stationnement.

L'usure a été mesurée en micron par face frottante par cycle d'exploitation (µm/face/cycle).

Les courbes de la figure 2 montrent l'usure mesurée lors des essais de freinage effectués sur des freins birotors constitués de disques obtenus à partir des 3 familles de préforme pour différentes températures T de traitement thermique final.

On constate d'une façon générale une très importante diminution de l'usure à une température de traitement thermique final comprise entre 1400°C et 1800°C, en particulier entre 1550°C et 1700°C, en comparaison avec un traitement thermique final à 2200°C induisant une graphitation.

Par rapport à des disques sans traitement thermique final, c'est-à-dire sans traitement thermique à une température sensiblement supérieure à celle rencontrée lors de la densification, on constate aussi de façon surprenante une amélioration substantielle de la résistance à l'usure lorsque les préformes en fibres de carbone ont subi un traitement thermique à haute température supérieure à 1600°C.

### Exemple 2

On a procédé comme dans l'exemple 1 sauf :
- THT des préformes en fibres de carbone à une température de 1850°C ; et
- densification par "caléfaction" avec du cyclohexane en tant que précurseur de carbone.

Le tableau ci-dessous montre l'usure mesurée de la même façon que dans l'exemple 1, pour différentes températures de traitement thermique final des disques en matériau composite C/C obtenus après densification.

| Température de traitement thermique final | Usure (µm/face/cycle) |
|---|---|
| 2000°C | 3,75 |
| 1850°C | 3,15 |
| 1650°C | 2,50 |

Une diminution sensible de l'usure est observée pour une température de traitement thermique final de 1650°C en comparaison avec une température de 2000°C.

## Revendications

1. Procédé de fabrication d'une pièce de friction à base de matériau composite carbone-carbone formé d'un renfort en fibres de carbone et d'une matrice en carbone formée de carbone pyrolytique issu d'un précurseur à l'état gazeux au moins dans une phase externe majoritaire de la matrice, le procédé comprenant la réalisation d'une préforme en fibres de carbone, la densification de la préforme par ladite matrice en carbone pyrolytique, et un traitement thermique final à haute température postérieurement à la densification,
**caractérisé en ce que** l'on forme une matrice en carbone pyrolytique de type laminaire rugueux, le traitement thermique final étant réalisé à une température comprise entre 1 400°C et 1 800°C sans induire de graphitation de la matrice en carbone pyrolytique de type laminaire rugueux, et **en ce que**, avant densification, un traitement thermique est réalisé sur la préforme en fibres de carbone à une température supérieure à 1600°C.

2. Procédé selon la revendication 1, **caractérisé en ce que** le traitement thermique final est réalisé à une température comprise entre 1 550°C et 1 700°C.

3. Procédé selon l'une quelconque des revendications 1 et 2, **caractérisé en ce que**, dans toute la matrice, le carbone est formé par du carbone pyrolytique issu de précurseur à l'état gazeux.

4. Procédé selon l'une quelconque des revendications 1 et 2, **caractérisé en ce que**, dans une phase interne minoritaire de la matrice, le carbone de la matrice est obtenu par imprégnation de la préforme par un précurseur de carbone à l'état liquide et carbonisation du précurseur.

5. Procédé selon la revendication 4, **caractérisé en ce que** le carbone de la phase interne minoritaire représente au plus 20 % du volume total du carbone de la matrice.

6. Procédé selon l'une quelconque des revendications 1 à 5, **caractérisé en ce que** la préforme fibreuse est réalisée par superposition de strates fibreuses bidimensionnelles en fibres de précurseur de carbone, liaison des strates entre elles par aiguilletage au fur et à mesure de la superposition des strates et carbonisation pour transformer les fibres en précurseur de carbone en fibres de carbone.

7. Procédé selon l'une quelconque des revendications 1 à 5, **caractérisé en ce que**, la préforme fibreuse est réalisée par superposition de strates fibreuses bidimensionnelles en fibres de carbone et liaison des strates entre elles par aiguilletage.

8. Procédé selon l'une quelconque des revendications 6 et 7, **caractérisé en ce que** l'aiguilletage de chaque nouvelle strate superposée est réalisé avec une densité d'aiguilletage au plus égale à 90 coups/cm².

## Patentansprüche

1. Verfahren zur Herstellung eines Reibteils auf der Basis von Kohlenstoff-Kohlenstoff-Verbundwerkstoff, gebildet aus einer Kohlenstofffaserverstärkung und aus einer Kohlenstoffmatrix, welche von pyrolytischem Kohlenstoff gebildet ist, der aus einem Vorläufer in gasförmigem Zustand wenigstens in einer äußeren Mehrheitsphase der Matrix hervorgegangen ist, wobei das Verfahren die Herstellung eines Kohlenstofffaservorformlings, die Verdichtung des Vorformlings durch die Matrix aus pyrolytischem Kohlenstoff und eine abschließende Wärmebehandlung bei hoher Temperatur nach der Verdichtung umfasst,
**dadurch gekennzeichnet, dass** eine Matrix aus pyrolytischem Kohlenstoff vom rauen laminaren Typ gebildet wird, wobei die abschließende Wärmebehandlung bei einer Temperatur im Bereich zwischen 1400 °C und 1800 °C durchgeführt wird, ohne eine Graphitierung der Matrix aus pyrolytischem Kohlenstoff vom rauen laminaren Typ zu bewirken, und dass vor der Verdichtung eine Wärmebehandlung an dem Kohlenstofffaservorformling bei einer Temperatur von über 1600 °C durchgeführt wird.

2. Verfahren nach Anspruch 1, **dadurch gekennzeichnet, dass** die abschließende Wärmebehandlung bei einer Temperatur im Bereich zwischen 1550 °C und 1700 °C durchgeführt wird.

3. Verfahren nach einem der Ansprüche 1 und 2, **dadurch gekennzeichnet, dass** der Kohlenstoff in der gesamten Matrix durch pyrolytischen Kohlenstoff, der aus einem Vorläufer in gasförmigem Zustand hervorgegangen ist, gebildet ist.

4. Verfahren nach einem der Ansprüche 1 und 2, **dadurch gekennzeichnet, dass** der Kohlenstoff der Matrix in einer inneren Minderheitsphase der Matrix durch Imprägnieren des Vorformlings mit einem Kohlenstoffvorläufer in flüssigem Zustand und Karbonisierung des Vorläufers erhalten wird.

5. Verfahren nach Anspruch 4, **dadurch gekennzeichnet, dass** der Kohlenstoff der inneren Minderheitsphase höchstens 20 % des Gesamtvolumens des Kohlenstoffs der Matrix ausmacht.

6. Verfahren nach einem der Ansprüche 1 bis 5, **dadurch gekennzeichnet, dass** der Faservorformling durch Übereinanderlegen von zweidimensionalen Faserlagen aus Kohlenstoffvorläuferfasern, Verbinden der Lagen untereinander durch Vernadeln entsprechend des Übereinanderlegens der Lagen sowie Karbonisierung zur Umwandlung der Kohlenstoffvorläuferfasern in Kohlenstofffasern hergestellt wird.

7. Verfahren nach einem der Ansprüche 1 bis 5, **dadurch gekennzeichnet, dass** der Faservorformling durch Übereinanderlegen zweidimensionaler Faserlagen aus Kohlenstoffasern und Verbinden der Lagen untereinander durch Vernadeln hergestellt wird.

8. Verfahren nach einem der Ansprüche 6 und 7, **dadurch gekennzeichnet, dass** das Vernadeln einer jeden neuen darauf gelegten Lage mit einer Nadelungsdichte von höchstens gleich 90 Stichen/cm² durchgeführt wird.

## Claims

1. A method of fabricating a friction part based on carbon/carbon composite material formed of a carbon fiber reinforcement and a carbon matrix formed of pyrolytic carbon originating from a precursor in gaseous state at least in a main external phase of the matrix, the method comprising making a carbon fiber preform, densifying the preform with said matrix of pyrolytic carbon, and, after said densification, performing a final heat treatment, **characterized in that** a pyrolytic carbon matrix is formed of the rough laminar type, the final heat treatment being performed at a temperature lying in the range 1400°C to 1800°C without including graphitization of the rough laminar type pyrolytic carbon matrix, and **in that**, prior to densification, heat treatment is performed on the carbon fiber preform at a temperature higher than 1600°C.

2. A method according to claim 1, wherein the final heat treatment is performed at a temperature lying in the range 1550°C to 1700°C.

3. A method according to claim 1 or 2, wherein, in the whole matrix, carbon is formed of pyrolytic carbon originating from a precursor in gaseous state.

4. A method according to claim 1 or 2, wherein, in an internal minority phase of the matrix, the carbon of the matrix is obtained by impregnating the preform with a carbon precursor in liquid state and carbonizing the precursor.

5. A method according to claim 4, wherein the carbon of the internal minority phase represents no more than 20 % of the total carbon volume of the matrix.

6. A method according to any one of claims 1 to 5, wherein the fiber preform is made by superposing two-dimensional fiber plies made of carbon precursor fibers, bonding the plies together by needling progressively as plies are superposed, and carbonizing to transform the carbon precursor fibers into carbon fibers.

7. A method according to any one of claims 1 to 5, wherein the fiber preform is made by superposing two-dimensional fiber plies made of carbon fibers, and bonding the plies together by needling progressively as the plies are superposed.

8. A method according to claim 6 or claim 7, wherein the needling of each newly superposed ply is performed with a needling density of no more than 90 strokes/cm².
